# EUROPÄISCHE PATENTSCHRIFT

(11) **EP 0 642 670 B1**
(45) Veröffentlichungstag und Bekanntmachung des Hinweises auf die Patenterteilung: **24.04.1996**
(21) Anmeldenummer: 92923791.5
(22) Anmeldetag: 25.11.1992
(51) Int. Cl.: G01P 3/481, G01P 1/00

(54) **VORRICHTUNG ZUR MESSUNG VON DREHBEWEGUNGEN**
DEVICE FOR MEASURING ROTATIONAL PARAMETERS
DISPOSITIF DE MESURE DE PARAMETRES DE ROTATION

(30) Priorität: 24.12.1991 DE 4142991; 05.03.1992 DE 4206910
(43) Veröffentlichungstag der Anmeldung: 15.03.1995
(73) Patentinhaber: ALFRED TEVES METALLWARENFABRIK GMBH & CO. OHG, D-51702 Bergneustadt (DE)
(72) Erfinder: GOOSSENS, André, F., L., B-2840 Rumst (BE); DE VOLDER, Edmond, B-2700 Sint-Niklaas (BE)
(74) Vertreter: Blum, Klaus-Dieter, Dipl.-Ing.
(86) Internationale Anmeldenummer: EP9202714
(87) Internationale Veröffentlichungsnummer: WO9313424

(56) Entgegenhaltungen:
- EP-A- 453 067
- EP-A- 462 435
- EP-A- 521 693
- EP-A- 0 454 547
- DE-A- 2 243 331
- DE-U- 8 815 130
- FR-A- 2 659 450
- GB-A- 2 225 398
- US-A- 4 864 231

## Beschreibung

Die Erfindung bezieht sich auf eine Vorrichtung zur Messung von Drehbewegungen, die im wesentlichen aus einem Signalgeberring, der mit dem die Drehbewegung ausführenden Teil gekoppelt ist, aus einem ortsfesten Sensor, der ein die Drehbewegung des Signalringes wiedergebendes elektrisches Signal erzeugt, und aus einem Sensorhalter besteht (DE-A-2 243 331).

Die Messung von Drehbewegungen und insbesondere der Geschwindigkeit und des Drehverhaltens der einzelnen Fahrzeugräder besitzt im Zusammenhang mit Kraftfahrzeug-Regelungssystemen, wie ABS, Antriebsschlupfregelungs- und Fahrwerksregelungssystemen usw. eine große Bedeutung. Es wird bei den Sensoren auf eine hohe Funktionsfähigkeit und Zuverlässigkeit, aber auch auf einen geringen Herstellungaufwand, auf einfache Montage und Auswechselung usw. Wert gelegt. Ein nicht unerheblicher Anteil des Gesamtaufwands für die Regelungssystemen ist nämlich für die Sensoren aufzuwenden.

Es existiert bereits eine Vielfalt von Sensortypen und Sensorkonstruktionen. Auf dem Markt erhältliche Fahrzeuge mit elektronisch geregelten Antiblockier- und Antriebsschlupfregelungssystemen sind vorwiegend mit induktiven Radsensoren ausgerüstet. Diese Sensoren sind an der Peripherie einer Zahnscheibe, die mit dem Rad umläuft, angeordnet. Die Sensoren erzeugen ein Magnetfeld.

Bewegt sich die Zahnscheibe, wird das Magnetfeld moduliert und in einer Spule im Inneren des Sensors eine Spannung induziert, deren Frequenz und Amplitude Aufschluß über die Drehbewegung geben. In der Regel werden allerdings nur die Frequenz oder Frequenzänderung zur Bestimmung der Raddrehzahl ausgewertet.

Sensoren dieser Art sind recht aufwendig. Sie müssen, weil ein bestimmter Luftspalt eingehalten werden muß, genau justiert werden. Der elektrische Anschluß, die mechanische Festigkeit der Drähte und die Abschirmung, die Verschmutzung und Beschädigung der Zahnscheiben, Korrosion, eindringende Feuchtigkeit usw. bereiten Probleme. Der Raumbedarf des Sensors der Zahnscheibe führt ebenfalls oft zu Schwierigkeiten.

Es sind auch sogenannte Radlagersensoren bekannt, bei denen der Sensor und der Impulsgeberring oder die Zahnscheibe mit dem Radlager baulich vereinigt sind. Dadurch wird der Platzbedarf für den Sensor gering. Außerdem sind Vorteile hinsichtlich der Herstellungs- und Montageaufwandes zu erwarten. Ein Nachteil besteht in der schlechten Zugänglichkeit des eingebauten Sensors, die eine Reparatur oder den Ersatz des Sensors erschwert.

Der Erfindung liegt nun die Aufgabe zugrunde, die Nachteile bekannter Vorrichtungen zur Messung von Drehbewegungen zu überwinden und eine Meßvorrichtung zu entwickeln, die sich vor allem durch einen einfachen Aufbau sowie durch einen vergleichsweise geringen Herstellung- und Montageaufwand auszeichnet. Ein Ausbau oder Austausch des Sensors zu Prüf- oder Reparaturzwecken sollte auf einfache Weise möglich sein.

Es hat sich nun gezeigt, daß diese Aufgabe mit einer Vorrichtung der eingangs genannten Art gelöst werden kann, deren Besonderheit darin besteht, daß der Sensor in Form eines Steckers oder steckerähnlichen Bauteils und der Sensorhalter in Form eines ortsfesten, den Sensor aufnehmenden, den Sensor an dem Signalgeberring positionierenden und in dieser Position haltenden Sensoraufnahme-Gehäuses ausgebildet sind.

Nach einer vorteilhaften Ausführung der Erfindung ist der Sensor in dem Sensoraufnahme-Gehäuse durch Paßsitz, Preßsitz, Einrastung, durch eine Steckverbindung oder durch eine ähnliche Maßnahme gehaltert. Dadurch genügen wenige Handgriffe zum Einbau und Ausbau des Sensors.

Das Sensoraufnahme-Gehäuse besitzt zweckmäßigerweise an der Stelle, an der der Sensor in Wechselwirkung mit dem Signalgeberring tritt, eine Aussparung, so daß z.B. ein geringer Luftspalt zwischen dem Sensor oder dem Polschuh eines Sensors und den sich vorbeibewegenden Zähnen einer als Signalgeberring dienenden Zahnscheibe eingestellt werden kann. Bei geschlossenem Gehäuse müßte für dieses ein Material gewählt werden, daß den Durchtritt der Feldlinien, deren Änderung zur Messung der Drehbewegung ausgewertet wird, höchstens geringfügig behindert.

Die erfindungsgemäße Meßvorrichtung läßt sich in besonders vorteilhafter Weise in Form eines aktiven oder passiven Radlagersensors ausbilden. In diesem Fall besteht der Signalgeberring aus gleichgmäßig verteilt an oder auf einem Radlagerring, z.B. auf einem mit dem Rad umlaufenden Radlageraußenring, angeordneten Zähnen oder entsprechenden Aussparungen. Der Sensorhalter ist in diesem Ausführungsbeispiel der Erfindung an der feststehenden Radachse mit Hilfe eines Seitenflanschs, eines entsprechenden Ringes, einer Scheibe oder dergleichen montiert.

In einem besonders günstigen Ausführungsbeispiel eines solchen Radlagersensors ist ein feststehendes, den Signalgeberring teilweise oder vollständig umgebendes Schutzgehäuse vorhanden, in das das Sensoraufnahmegehäuse eingefügt ist und das über einen Seitenflansch cder dergleichen mit der feststehenden Radachse bzw. mit einem feststehenden Teil des Radträgers oder Radlagers, z.B. des Lagerinnenrings verbunden ist.

Bei einer derartigen Ausgestaltug der erfindungsgemäßen Meßvorrichtung als Radlagersensor wirkt sich die Ausbildung des Sensors zu einem steckerähnlichen Gebilde besonders günstig aus, weil sich dadurch der Sensor trotz der engen Platzverhältnisse am Radlager leicht montieren und demontieren läßt.

Nach einer weiteren Ausführungart der Erfindung ist der Sensor in Form eines langgestreckten Körpers, z.B. eines Stiftes mit rundem, eckigem, abgerundetem Querschnitt geformt oder in Form eines entsprechenden Stiftes mit gestuftem Querschnitt gestaltet. Diese Bauformen begünstigen das Einstecken und Demontieren des Sensors in dem Sensoraufnahme-Gehäuse.

Der Sensor kann erfindungsgemäß entweder parallel zu der Drehachse oder Radlagerachse oder in einem spitzen Winkel zu dieser positioniert werden. Auf diese Weise ist eine optimale Anpassung an den vorhandenen Platz möglich.

Ein weiterer wesentlicher Vorteil eines nach der Erfindung aufgebauten Radlagersensors besteht darin, daß die Lagerkonstruktion höchstens minimal von dem Sensor beeinflußt wird. Es wird dadurch möglich, dasselbe Lager mit und ohne Sensor zu verwenden, was sich z.B. bei Verwendung solcher Lager als Radlager für die Räder eines Kraftfahrzeuges kostengünstig auf die Herstellung des Fahrzeugs auswirkt.

Die Ausbildung des Sensors der erfindungsgemäßen Meßvorrichtung zu einem Stecker macht es möglich, das Anschlußkabel permanent mit dem Sensor zu verbinden. Eine Steck-Kupplung, die am Rad wegen der dort auftretenden Vibrationen besonders hochwertig und damit aufwendig ausgebildet sein muß, entfällt. Wird auf eine Steck-Kupplung Wert gelegt, kann diese an einen von dem Radlagersensor entfernten, geschützten Ort verlegt werden.

In den beigefügten Unteransprüchen sind noch einige weitere, besonders günstige Ausführungsbeispiele genannt.

Weitere Merkmale, Vorteile und Anwendungsmöglichkeiten der Erfindung gehen aus der folgenden Darstellung von Ausführungsbeispielen anhand der beigefügten Abbildungen hervor.

Es zeigen
- Fig. 1: schematisch vereinfacht in Teildarstellung und im Schnitt ein Radlager mit einem Radlagersensor nach der Erfindung,
- Fig. 2: ebenfalls im Schnitt und vereinfacht eine weitere Ausführungsart einer Meßvorrichtung nach der Erfindung und
- Fig. 3: im Schnitt, vereinfacht und in Teildarstellung einen Radlagersensor nach der Erfindung mit spitzwinkliger Anordnung zur Radlagerachse.

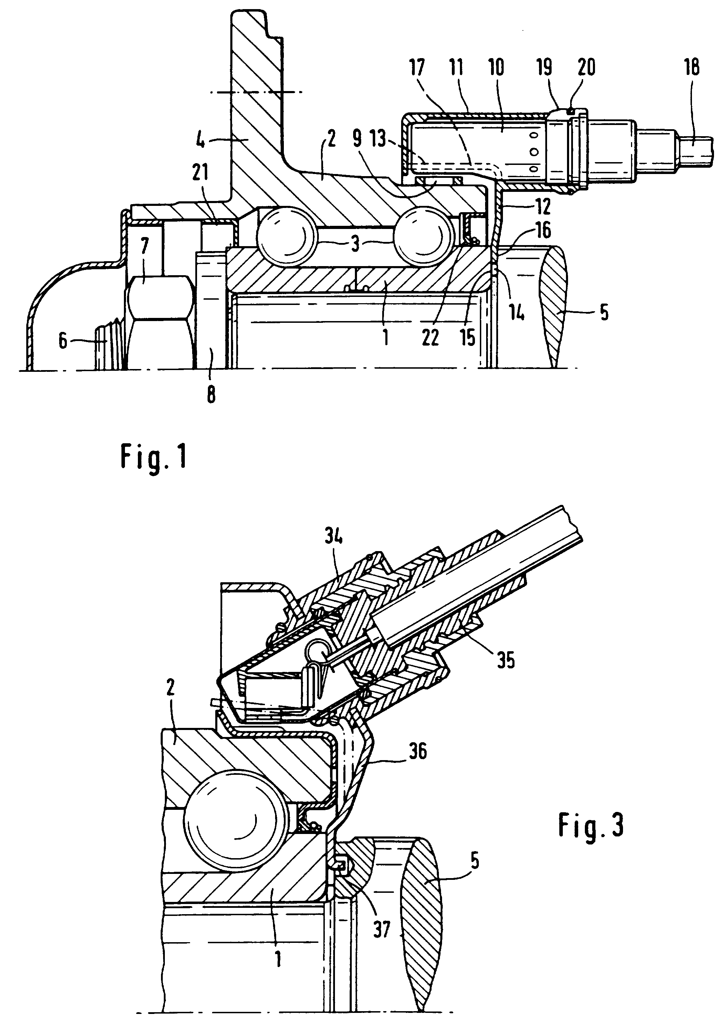

Nach Fig. 1 besitzt ein Radlager, daß für ein Kraftfahrzeug vorgesehen ist, einen Lagerinnenring 1 und einen Lageraußenring 2. Die beiden Lagerringe 1,2 sind durch Kugeln 3 getrennt. Die übrigen Bauteile des Lagers, z.B. die beiseitigen Dichtungen 21,22, sind in Fig. 1 nur symbolisch angedeutet. An den Lageraußenring 2 ist ein Radflansch 4 angeformt, der in bekannter und hier nicht dargestellter Weise zur Anbringung der Bremsscheibe und des Rades dient.

Der Lagerinnenring 1 sitzt auf einer feststehenden, gestuften Welle oder Radachse 5. Die Radachse 5 endet in einem Schraubbolzen 6, der eine Mutter 7 aufnimmt, die über eine Zwischen- oder Unterlegscheibe 8 eine feste Verbindung zwischen dem (mehrteiligen) Lagerinnenring 1 und der Achse 5 herstellt.

Besonders vorteilhaft ist es, den Flansch 12 fest mit dem feststehenden Lagerinnenring 1 zu verbinden. Durch eine derartige konstruktive Ausgestaltung wird es möglich, die Funktion "Signalerzeugung" vor dem Einbau zu prüfen.

Die erfindungsgemäße Meßvorrichtung, die hier als Radlagersensor ausgebildet ist, setzt sich aus einem Signalgeberring 9, einem Sensor 10 und einem Sensorhalter zusammen. Dieser Sensorhalter ist in Form eines Sensoraufnahme-Gehäuses 11 ausgebildet, das mit Hilfe eines Seitenflanschs 12, an der Radachse 5 befestigt ist.

In das Sensoraufnehme-Gehäuse 11 wird hier der eigentliche Meßwertaufnehmer oder Sensor 10, der einstückig mit einem (geschirmten) Anschlußkabel 18 verbunden ist, lediglich eingeschoben. Der Innenraum des Gehäuses 11 und die Außenkontur des Sensors 10 sind derart aufeinander abgestimmt, daß der Sensor 10 zwangsläufig seine vorgesehene Position in dem Gehäuse 11 und damit in Relation zu der Signalgeberscheibe 9 einnimmt. Eine Rastnase 19 und eine Rastfeder 20 - die Rastnase ist in vorliegendem Fall an dem Sensor 10, die Rastfeder 20 an dem Gehäuse 11 angeordnet - sorgen für die axiale Positionierung im Sensoraufnahme-Gehäuse und für die Arretierung des Sensors 10 in diesem Gehäuse 11.

In dem Ausführungsbeispiel nach Fig. 1 umgibt ein feststehendes Schutzgehäuse 13 den Signalgeberring 9. Zu diesem Schutzgehäuse gehört der Halteflansch oder Seitenflansch 12, der hier in Form eines senkrecht zur Drehachse angeordneten Ringes ausgebildet ist.

Dieser Ring wird hier zwischen einer Stirnfläche 15 des feststehenden Lagerinnenringes 1 des Radlagers und einer parallelen, durch Abstufung oder Querschnittserweiterung der Radachse 5 entstandenen Fläche 16 eingeklemmt und dadurch gehaltert. An diesem Ring oder Seitenflansch 12 ist ein hohlzylinderförmiges Teil 17 das den Signalgeberring 9 überdeckt, angesetzt.

Das Schutzgehäuse 13, das hier aus den Teilen 12 und 17 besteht, dient hier gleichzeitig zur Halterung des Sensoraufnahme-Gehäuses 11. Dieses Gehäuse 11 ist hierzu direkt auf der Wandung des hohlzylinderförmigen, über den Signalgeberring 9 hinweggreifenden Schutzgehäuseteils 17 aufgesetzt und mit diesem zu einem einstückigen Teil verbunden. Die Wandung 17 des Schutzgehäuses 13 ist in Höhe dieses Sensoraufnahme-Gehäuses 11 durchbrochen, damit an dieser Stelle der eingesteckte Sensor 10 in guten Wirkkontakt mit dem Signalgeberring 9 gelangt.

Das Schutzgehäuse 13 bzw. dessen Seitenflansch 12 ist mit einer Positionierungslippe oder Positionierungsrippe 14 versehen, die in eine entsprechende Einkerbung oder Aussparung in den feststehenden Teilen, nämlich in der Radachse 5 und/oder in den Lagerinnenring 1, eingreift. Dadurch wird die Winkellage des Seitenflansches 13 bzw. des Schutzgehäuses 13, damit des Sensoraufnahme-Gehäuses 11 und schließlich des Sensors 10 in der Drehebene festgelegt.

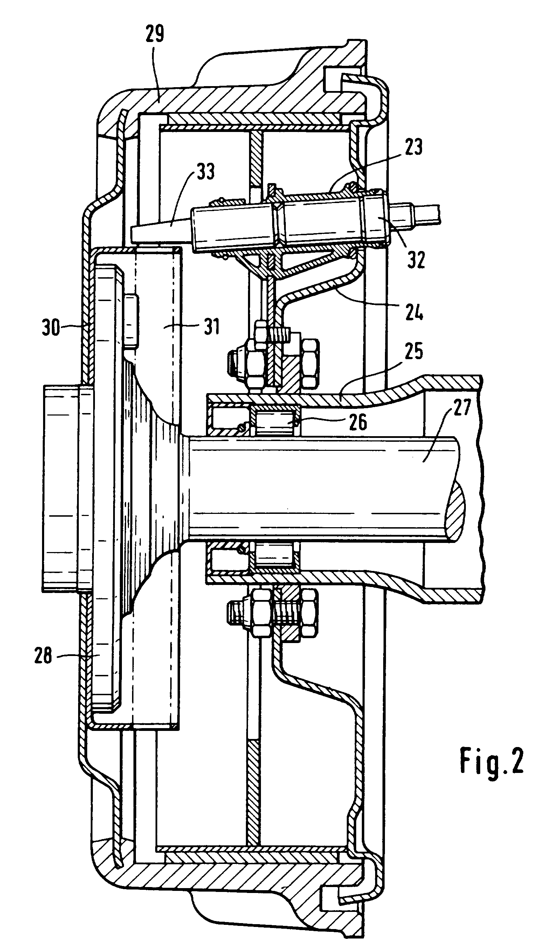

Fig. 2 veranschaulicht den Einbau der erfindungsgemäßen Meßvorrichtung in die Bremstrommel des Rades eines Kraftfahrzeuges.

Ein Sensoraufnahme-Gehäuse 23 ist in diesem Ausführungsbeispiel in dem Lagerschild 24 des dargestellten Rades eingebaut. In dem Achsschenkel 25 des Rades, an dem der Lagerschild 24 befestigt ist, ist unter Einfügung eines Rollenlagers 26 eine Welle 27 drehbar gelagert, die einen Radflansch 28 trägt. An diesem Radflansch sind eine Bremstrommel 29 und die nicht dargestellte Felge eines Fahrzeugrades montiert.

Im Inneren der Bremstrommel 29 ist an einem Flansch 30 ein Signalgeber oder Impulsgeberring 31 montiert. Ein solcher Impulsgeberring besteht beispielsweise aus einem Rad oder eine Scheibe, die an ihrem Umfang - tangential oder seitlich, je nach Anordnung und Ausbildung des Sensors - mit gleichmäßig über den Umfang verteilten Zähnen oder Einkerbungen versehen ist.

In dem Sensoraufnahme-Gehäuse 23 sitzt ebenso wie in dem Ausführungsbeispiel nach Fig. 1 ein als Stecker ausgebildeter Sensor 32. Durch eine Einrastung, Schnappverschluß, Paßsitz oder auf ähnliche Weise wird der Sensor 32 beim Einstecken in das Sensoraufnahme-Gehäuse 23 in der vorgesehenen Lage positioniert und gehaltert. Die Relativbewegung der Zähne des Impulsgeberringes 31 zu dem Sensor 32 oder zu den Polschuhen 33 dieses Sensors wird mit Hilfe des Sensors 32 in ein elektrisches Signal, das die Radbewegung wiedergibt, umgesetzt.

Auch in dem Ausführungsbeispiel nach Fig. 2 sind der Signalgeberring 31 und der Sensor 32, wie der Zeichnung zu entnehmen ist, vor mechanischen Einwirkungen und vor Verschmutzungen geschützt angeordnet. Der eigentliche Sensorkörper oder Sensor 32 läßt sich durch die Ausbildung dieses Sensors als Stecker und die Anordnung in einem entsprechenden Steckeraufnahme-Gehäuse (23) einfach und schnell montieren oder austauschen. Es erfolgt zwangsläufig eine sehr genaue Positionierung.

Der Sensor ist in den Ausführungsbeispielen nach Fig. 1 exakt parallel zur Drehachse und nach Fig. 2 nahezu parallel zu dieser Achse angeordnet. In vielen Fällen dürfte, z.B. der leichteren Montage oder besseren Zugänglichkeit wegen, die Anordnung dieses Sensors in einem spitzen Winkel zu der Drehachse von Vorteil sein.

Fig. 3 veranschaulicht ein Ausführungsbeispiel der Erfindung, bei der ein Sensoraufnahme-Gehäuse 34 und damit der zugehörige Sensor 35 in einem spitzen Winkel zu der Drehachse eingebaut sind. Im übrigen handelt es sich bei der Ausführungsart nach Fig. 3 um einen Radlagersensor, der weitgehend der Anordnung nach Fig. 1 entspricht. Zur Halterung des Sensoraufnahme-Gehäuses 34 ist wiederum ein Seitenflansch 36 vorgesehen, der mit der feststehenden Radachse 5 und dem feststehenden Lagerinnenring 1 eines Radlagers verbunden ist. Eine Positionierungslippe 37, die die Winkellage in der Drehebene festlegt, ist ebenfalls angedeutet.

## Patentansprüche

1. Vorrichtung zur Messung von Drehbewegungen, bestehend im wesentlichen aus einem Signalgeberring (9,31), der mit dem die Drehbewegung ausführenden Teil gekoppelt ist, aus einem ortsfesten Sensor (10,32,35), der ein die Drehbewegung des Signalringes wiedergebendes elektrisches Signal erzeugt, und aus einem Sensorhalter, dadurch **gekennzeichnet,** daß der Sensor (10,32,35) in Form eines Steckers oder steckerähnlichen Bauteils und der Sensorhalter in Form eines ortsfesten, den Sensor aufnehmenden, den Sensor an dem Signalgeberring positionierenden und in dieser Position haltenden Sensoraufnahme-Gehäuses (11,23,34) ausgebildet sind.

2. Vorrichtung nach Anspruch 1, dadurch **gekennzeichnet,** daß der Sensor (10,32,35) in den Sensoraufnahme-Gehäuse (11,23,34) durch Paßsitz, Preßpassung, Einrastung, durch eine Steckverbindung oder dergleichen positioniert und gehaltert ist.

3. Vorrichtung nach Anspruch 1 oder 2, dadurch **gekennzeichnet,** daß das Sensoraufnahme-Gehäuse (11,23,34) im Bereich des Signalgeberrings (9,31) eine den Wirkkontakt zwischen dem Signalgeberring und dem Sensor (10,32,35) herstellende oder verbessernde Aussparung aufweist.

4. Vorrichtung nach einem der Ansprüche 1 bis 3, dadurch **gekennzeichnet,** daß das Sensoraufnahme-Gehäuse (11,34) an einem stählernen, mit der feststehenden Achse der Meßvorrichtung verbundenen Seitenflansch (12,36) befestigt ist.

5. Vorrichtung nach Anspruch 4, dadurch **gekennzeichnet**, daß die Winkellage des Sensoraufnahme-Gehäuses und damit des Sensors in der Drehebene durch eine oder mehrere Positionierungslippen oder -rippen (14,37) im Seitenflansch (12,36), die bei dem Zusammenbau der Teile in entsprechende Aussparungen eingreifen, oder durch ähnliche Maßnahmen festgelegt ist.

6. Vorrichtung nach einem der Ansprüche 1 bis 5, dadurch **gekennzeichnet,** daß diese als aktiver oder passiver Radlagersensor ausgebildet ist, wobei der Signalgeberring (9,31) aus gleichmäßig verteilt an einem Radlagerring, der mit dem Rad umläuft, angeordneten Zähnen oder Aussparungen besteht und wobei der Sensorhalter (11,23,34) an der feststehenden Radachse (5) bzw. an einem feststehenden Teil (1) des Radträgers oder Radlagers montiert ist.

7. Vorrichtung nach Anspruch 6, dadurch **gekennzeichnet**, daß ein feststehendes, den Signalgeberring (9,31) teilweise oder vollständig umgebendes Schutzgehäuse (13) vorhanden ist, in das das Sensoraufnahme-Gehäuse (11) eingefügt ist und das über einen Seitenflansch, einen Ring (12) eine Scheibe oder dergleichen mit der feststehenden Radachse (5) und/oder mit dem feststehenden Teil (1) des Radlagers verbunden ist.

8. Vorrichtung nach Anspruch 6 oder 7, dadurch **gekennzeichnet,** daß der Sensor (10,32,35) in Form eines langestreckten Körpers, z.B. eines Stiftes mit rundem, eckigem oder eckigem, abgerundetem Querschnitt oder in Form eines entsprechenden Stiftes mit gestuften Querschnitt ausgebildet ist.

9. Vorrichtung nach Anspruch 8, dadurch **gekennzeichnet**, daß der Sensor (10,32,35) und das Sensoraufnahme-Gehäuse (11,23,34) mit einer Rastnase (19), einer Rastfeder (20) und mit entsprechenden Aussparungen zum Eingriff der Rastnase oder Rastfeder versehen sind.

10. Vorrichtung nach einem der Ansprüche 1 bis 9, dadurch **gekennzeichnet**, daß der Sensor (10) durch das Sensoraufnahme-Gehäuse (11) in einer zur Drehachse oder zur Radlagerachse parallelen Richtung positioniert ist.

11. Vorrichtung nach einem der Ansprüche 1 bis 9, dadurch **gekennzeichnet**, daß der Sensor (32,35) durch das Sensoraufnahme-Gehäuse (32,34) in einem spitzen Winkel zu der Drehachse oder zu der Radlagerachse positioniert ist.

## Claims

1. A device for measuring rotary motions which essentially consists of a signal generator ring (9, 31) coupled to the part performing the rotary motion, a stationary sensor (10, 32, 35) generating an electric signal representing the rotary motion of the signal ring, and a sensor holder,
**characterized** in that the sensor (10, 32, 35) is designed in the form of a plug or plug-like component and the sensor holder is designed in the form of a stationary sensor-accommodating housing (11, 23, 34) which accommodates the sensor, positions the sensor proximate the signal generator ring and maintains it in this position.

2. A device as claimed in claim 1,
**characterized** in that the sensor (10, 32, 35) is positioned and held in the sensor-accommodating housing (11, 23, 34) by a snug fit, press fit, click-in mechanism, and a plug connection or the like.

3. A device as claimed in claim 1 or in claim 2,
**characterized** in that, in the area of the signal generator ring (9, 31), the sensor-accommodating housing (11, 23, 34) has a recess which establishes or improves the operative contact between the signal generator ring and the sensor (10, 32, 35).

4. A device as claimed in anyone of claims 1 through 3,
**characterized** in that the sensor-accommodating housing (11, 34) is fastened to a lateral flange (12, 36) of steel which is connected with the stationary axle of the measuring device.

5. A device as claimed in claim 4,
**characterized** in that the angular position of the sensor-accommodating housing and, thus, of the sensor in the plane of rotation is fixed by one or several positioning lips or ribs (14, 37) in the lateral flange (12, 36), which engage corresponding recesses when the parts are assembled, or by similar measures.

6. A device as claimed in anyone of claims 1 through 5,
**characterized** in that the device is designed as an active or passive wheel bearing sensor, and the signal generator ring (9, 31) consists of evenly distributed teeth or recesses on a wheel bearing ring, which rotates with the wheel, and wherein the sensor holder (11, 23, 34) is mounted on respectively the stationary wheel axle (5) or a stationary part (1) of the wheel support or wheel bearing.

7. A device as claimed in claim 6,
**characterized** in that a stationary protective housing (13) is provided which partially or completely surrounds the signal generator ring (9, 31) and houses the sensor-accommodating housing (11) and which, by way of a lateral flange, a ring (12), a disk or the like, is connected to the stationary wheel axle (5) and/or the stationary part (1) of the wheel bearing.

8. A device as claimed in claim 6 or in claim 7,
**characterized** in that the sensor (10, 32, 35) is designed in the form of an oblong body, such as that of a pin with a round, an angular, or a rounded angular cross-section, or in the form of a corresponding pin with a stepped cross-section.

9. A device as claimed in claim 8,
**characterized** in that the sensor (10, 32, 35) and the sensor-accommodating housing (11, 23, 34) are provided with a latch (19), a stop spring (20) and with corresponding recesses for the engagement with the latch or stop spring.

10. A device as claimed in anyone of claims 1 through 9,
**characterized** in that the sensor (10) is positioned by the sensor-accommodating housing (11) in a direction parallel to the axis of rotation or the wheel bearing axis.

11. A device as claimed in anyone of claims 1 through 9,
**characterized** in that the sensor (32, 35) is positioned by the sensor-accommodating housing (32, 34) at an acute angle with regard to the axis of rotation or the wheel bearing axis.

## Revendications

1. Dispositif de mesure de mouvements de rotation, qui est constitué, pour l'essentiel, d'un anneau générateur de signaux (9, 31), accouplé à la pièce exécutant le mouvement de rotation, d'un capteur fixe (10, 32, 35), produisant un signal électrique qui reproduit le mouvement de rotation de l'anneau générateur de signaux, et d'un porte-capteur, caractérisé en ce que le capteur (10, 32, 35) est réalisé sous forme d'un élément d'enfichage ou d'une pièce analogue à une fiche et le porte-capteur est réalisé sous forme d'un boîtier de logement de capteur (11, 23, 24) fixe qui sert à loger le capteur, positionne le capteur sur l'anneau générateur de signaux et le maintient dans cette position.

2. Dispositif selon la revendication 1, caractérisé en ce que le capteur (10, 32, 35) est positionné et maintenu dans le boîtier de logement de capteur (11, 23, 34) au moyen d'un ajustement fin, d'un ajustement serré, d'un enclenchement, d'une liaison par enfichage ou analogue.

3. Dispositif selon la revendication 1 ou 2, caractérisé en ce que le boîtier de logement de capteur (11, 23, 34) comporte, dans la zone de l'anneau générateur de signaux (9, 31), un évidement qui produit ou améliore le contact de coopération entre l'anneau générateur de signaux et le capteur (10, 32, 35).

4. Dispositif selon l'une des revendications 1 à 3, caractérisé en ce que le boîtier de logement de capteur (11, 34) est fixé sur un flasque latéral (12, 36) en acier qui est relié à l'axe fixe du dispositif de mesure.

5. Dispositif selon la revendication 4, caractérisé en ce que la position angulaire du boîtier de logement de capteur, et donc du capteur, dans le'plan de rotation est fixée au moyen d'une ou plusieurs lèvres ou nervures de positionnement (14, 37) qui sont réalisées sur le flasque latéral (12, 36) et qui, lors de l'assemblage des pièces, s'emboîtent dans des évidements correspondants.

6. Dispositif selon l'une des revendications 1 à 5, caractérisé en ce que ce dispositif est réalisé sous forme d'un capteur de roulement de roue de type actif ou passif, l'anneau générateur de signaux (9, 31) étant constitué de dents ou d'encoches disposées d'une manière uniformément répartie sur un anneau de roulement de roue qui tourne avec la roue, tandis que le porte-capteur (11, 23, 34) est monté sur l'axe de roue (5) fixe ou sur une partie fixe (1) du support de roue ou du roulement de roue.

7. Dispositif selon la revendication 6, caractérisé en ce qu'il est prévu un boîtier de protection (13) fixe qui entoure partiellement ou totalement l'anneau générateur de signaux (9, 31) et dans lequel le boîtier de logement de capteur (11) est inséré, ce boîtier de protection (13) étant relié à l'axe de roue (5) fixe et/ou à la partie fixe (1) du roulement de roue, par l'intermédiaire d'un flasque latéral, d'un anneau (12), d'un disque ou analogue.

8. Dispositif selon la revendication 6 ou 7, caractérisé en ce que le capteur (10, 32, 35) est réalisé sous forme d'un corps allongé, par exemple d'une broche à section transversale circulaire, polygonale ou arrondie, ou sous forme d'une broche correspondante à section étagée.

9. Dispositif selon la revendication 8, caractérisé en ce que le capteur (10, 32, 35) et le boîtier de logement de capteur (11, 23, 34) sont pourvus d'un talon d'enclenchement (19), d'un ressort d'enclenchement (20) et d'évidements correspondants destinés à l'accrochage du talon d'enclenchement ou du ressort d'enclenchement.

10. Dispositif selon l'une des revendications 1 à 9, caractérisé en ce que le capteur (10) est positionné, au moyen du boîtier de logement de capteur (11), suivant une direction parallèle à l'axe de rotation ou à l'axe du roulement de roue.

11. Dispositif selon l'une des revendications 1 à 9, caractérisé en ce que le capteur (32, 35) est positionné, au moyen du boîtier de logement de capteur (32, 34), de façon à faire un angle aigu avec l'axe de rotation ou avec l'axe du roulement de roue.
